# EUROPEAN PATENT SPECIFICATION

(11) **EP 3 253 932 B1**
(45) Date of publication and mention of the grant of the patent: **19.12.2018**
(21) Application number: 15721883.5
(22) Date of filing: 06.02.2015
(51) Int. Cl.: E04D 11/00, A01G 9/033

(54) **STRUCTURAL ELEMENTS FOR NATURALIZATION OF HORIZONTAL AND INCLINED SEALED SURFACES**
STRUKTURELEMENTE ZUR NATURALISIERUNG VON HORIZONTALEN UND GENEIGTEN VERSIEGELTEN OBERFLÄCHEN
ÉLÉMENTS STRUCTURAUX POUR LA NATURALISATION DE SURFACES ÉTANCHES HORIZONTALES ET INCLINÉES

(43) Date of publication of application: 13.12.2017
(73) Proprietor: Green Safe S.r.l., 05035 Nami (TR) (IT)
(72) Inventor: BAZZARIN, Daniele, I-05100 Terni (TR) (IT)
(74) Representative: Sarpi, Maurizio
(86) International application number: PCT/IT2015/000028
(87) International publication number: WO 2016/125197

(56) References cited:
- CN-B- 101 316 504
- DE-A1- 3 728 468
- JP-A- 2009 142 250
- US-A1- 2007 283 653
- US-A1- 2010 325 975
- US-A1- 2013 167 440
- US-A1- 2013 239 476

## Description

The present invention relates to the sector of green roofs and green walls and more in particular to a modular system constituted by structural elements that enable naturalization of surfaces that are sealed, i.e., covered with waterproofing or else cement or in any case treated so as to prevent infiltration of water. The term "naturalization" is here understood as the creation of a green-roof or green-wall system that can enable development of plants and that makes it possible to design extensive and intensive green roofs and walls on either plane or inclined surfaces.

Each structural element or module is constituted by a container with quadrangular layout, articulated in the form of communicating trays in order to provide proper hydraulic continuity inside it, and by a filling constituted by materials that favour the growth of plants, such as expanded perlite, and is completed by a top closing layer that has the function of separation and filtration element in regard to a growing medium that is laid on top, albeit enabling passage within the container itself of the roots of the various species grown. This enables the layer of perlite to provide its contribution to the development of the roots of the plants, ensuring for the latter proper circulation of air and water, and consequently reducing the thickness of the top growing medium.

The container is obtained with purposely provided techniques of thermoforming of non-woven draining geotextiles, of different masses per unit area, preferably made up of 100% polyester.

In a preferred embodiment, the container and the top layer are joined together by application of glue all along the edge of the lid and on appropriate projections provided on the base after being pre-filled with a material that favours the growth of plants, such as a layer of humus and/or loose mixtures of mineral or synthetic aggregates, such as for example expanded perlite, expanded vermiculite, expanded clay, pumice, lapilli, peat, coconut fibres, bark, natural or recycled clays, zeolytes, cellulose, and fibres in general.

Development of the roots of the plants within the module is guaranteed by the capacity of penetrating through the layer of separation between the medium and the aggregate material, ensuring proper circulation of air and water.

Yet a further advantageous characteristic lies in the fact that the module can be used alone, or else a number of modules can be laid alongside one another on all four sides to form continuous series, given that the possibility of joining them together is afforded by the characteristics of the individual pieces, it being envisaged that the top closing layer of each module presents flaps that project on two contiguous sides, which are sufficient to guarantee - once one projecting flap provided on one side of one module is simply set on top of a side without flap of another module - perfect continuity of this layer, which has the function of separation and filtration element in regard to any growing medium, thus enabling creation of green surfaces over sealed areas, whether plane or inclined.

The invention arises from the ever-growing awareness in regard to the use of systems of green cover in buildings and from the need to provide integrated solutions that solve the problems linked to safety, aesthetics, and functionality of the construction elements.

### PRIOR ART

The Italian reference standard for green roofs and walls (UNI 11235) envisages that a green cover is constituted by the following structural layers:
a. Load-bearing element (deck layer);
b. Waterproofing element;
c. Root-barrier element (whether integrated or not) ;
d. Mechanical protective element;
e. Water-retention element;
f. Drainage element;
g. Filtration element;
h. Growing medium; and
i. Plant cover.

In the current state of the art, laying of the elements d, e, f, and g is carried out in four successive steps.

In the field of creation of green roofs and walls, two main technologies are distinguished.

The first envisages providing the element for water retention, drainage, and aeration with plastic materials or polystyrene, which are employed together with geotextiles used in the free state, simply rested in place thereon so as to provide, in the top part, the filtration element and, in the bottom part, the layer for water retention and protection of the waterproofing layer.

The second technology that is adopted envisages providing the layer for water retention, drainage, and aeration by application of geotextile bags already filled with expanded perlite, which are rested thereon. This structural element is completed by laying out, in the bottom part, a geotextile in order to provide the drainage element and, in the top part, a filtering sheet in order to form the filtration element to be applied underneath the growing medium.

Structural elements incorporating said four layers envisaged by the standards in a single element are already known .

Patent document US 2013/167440 (D1) discloses a structural element constituted by a container with quadrangular layout, the inside of which is articuled in the form of trays communicating with one another in order to provide proper hydraulic continuity inside it; a filling for said container, constituted by materials that favour the growth of plants, and a top closing layer that has the function of separation and filtration element in regard to any growing medium that is laid on top, albeit enabling passage within the container itself of the apertures.

Also the patent documents US 2007/283653 (D2), CN 101 316 504 (D3), and US 20101/325975 (D4) disclose similar structural elements.

However the components of the element of the first document D1 are made of thermoplastic like HPDE, while the components of the element of D2 are made of polyester.

Similarly, in D3 and D4 the top layer is in a flat fabric form with the container being rather solid.

The task of the present invention is to overcome the limits and drawbacks of the prior art by proposing a module made of thermoformed non-woven fabric, with different mass per unit area for the top layer and container, according to claim 1. More particularly, said module is constituted by a series of trays connected together obtained by thermoforming of non woven draining geotextiles , which are able to provide proper hydraulic communication once they have been filled with materials that favour plant growth, closed at the top by a top layer, once again made of non-woven fabric but with low mass per unit area, which has the function of separation and filtration element in regard to any growing medium that is laid on top.

With the above characteristics, this module enables the function of drainage, of retention of water-based fertilizing solutions, of filtration, of root-barrier element for protection against perforation of the waterproof layer, and of separation between the various component layers that normally make up green roofs or walls. Furthermore, it allows for thermal expansion of the various parts of the buildings with protection of the joints. It hence integrates all the functions that are normally obtained using a number of products, thus enabling a considerable saving in terms of manufacturing costs and ease of production.

All this enables proper development of the roots of the plants within the module forming the subject of the invention, ensuring for the roots proper circulation of air and water.

It should moreover be pointed out that the module, once adequately filled, has an excellent filtering capacity and can thus be used for purification of the water prior to its entry into the sewers in so far as it intrinsically has the capacity to withhold the particles percolated from the overlying layers and to retain and filter the solutions that traverse it.

Another important feature of the module forming the subject of the invention is represented by the fact that, when it is laid directly on the waterproofing layer that protects the surface undergoing naturalization, it manifests a marked capacity of barrier against perforation of the membrane itself, preventing any equipment envisaged for normal maintenance operations from coming, even accidentally, into contact with the waterproofing layer.

Basically, it combines the features that, according to the standard UNI 11235/2007, are indispensable in order to provide a green cover and that require adoption of a number of products to be laid on top of one another.

Once filled, each module has the capacity of withholding approximately 25 kg of water-based solutions, allowing the excess water to run off in a decelerated way. This enables regulation of the concentration flow in the case of a fierce storm, so reducing the flow of water entering the sewers per unit time.

Further characteristics and advantages of the invention will emerge clearly from the ensuing detailed description, with reference to the drawings, which illustrate, merely by way of nonlimiting example, a preferred embodiment thereof. In the drawings:
Figure 1 is a cross-sectional view of a series of structural elements according to the invention mounted on a deck layer between a waterproof root-barrier membrane and a growing medium of earths and soils in which the vegetal species are planted;
Figure 2 is a plan view of the structural element consisting of small trays;
Figure 3 is a cross-sectional view according to the plane of trace A-A of Figure 2;
Figure 4 is a cross-sectional view according to the plane of trace B-B of Figure 2;
Figure 5 shows the detail C of Figure 4 at a larger scale;
Figure 6 shows the detail D of Figure 3 at a larger scale;
Figure 7 shows in perspective view from above the inside of the empty container element;
Figure 8 shows the bottom of the same element in perspective view from above; and
Figure 9 shows in perspective view from above the module partially filled and partially covered by the top growing medium.

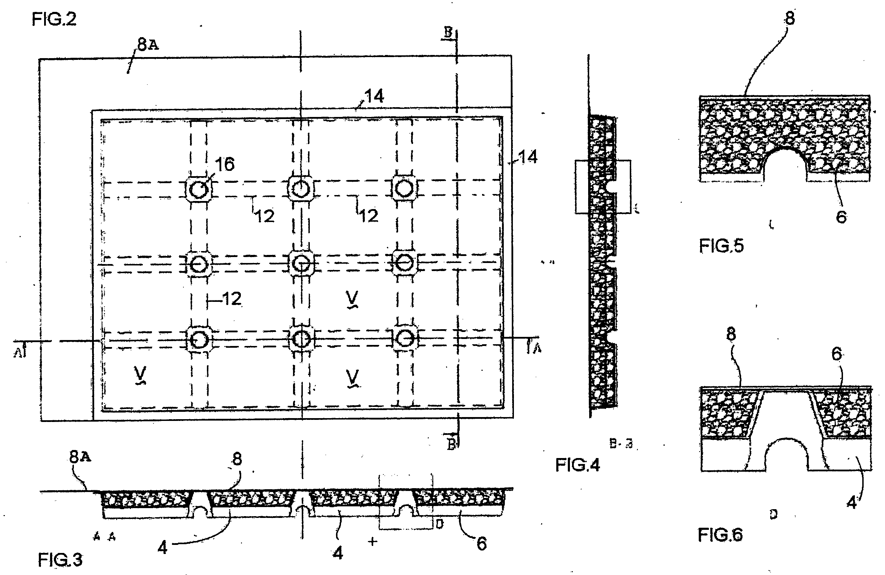

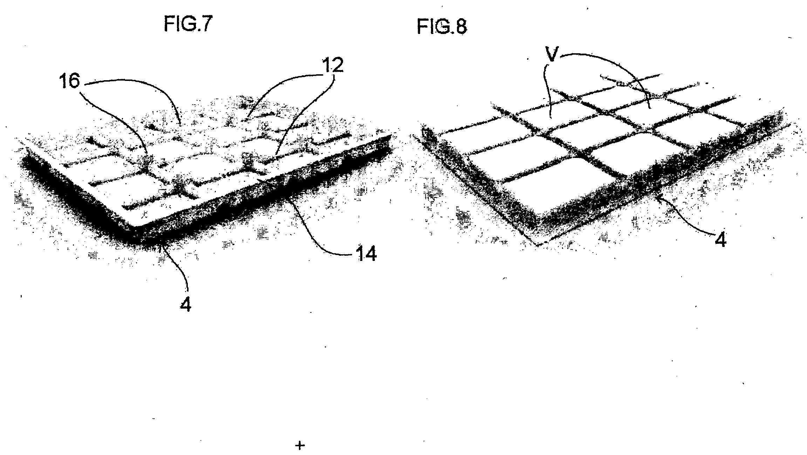

With reference to Figures 2-9, in a preferred embodiment, the structural element for green roofs and walls forming the subject of the present invention is made up of a container element 4, an expanded-perlite filling 6, and a top closing layer 8.

The container element 4 is constituted by a module made of non-woven draining geotextile, preferably of the 100%-polyester type, having a minimum mass per unit area of 500 g/m², but preferably a mass per unit area of between 750 and 850 g/m², even more preferably 800 g/m², with a thickness of between 4.5 and 6.5 mm, preferably 5.5 mm, and a density of between 135 and 175 kg/m³, preferably 160 kg/m³.

The module, obtained with a purposely devised thermoforming technique, presents as a single quadrangular container provided with internal ribbings 12, parallel to the sides, which are set lower than the perimetral edges 14 so as to define a plurality of small trays V of small dimensions that guarantee, however, the hydraulic continuity inside it, once they have been filled with expanded perlite or the like. Advantageously, at each criss-crossing of the aforesaid internal ribbings 12, raised areas 16 are provided, which have a height equal to that of the perimetral edges 14 and constitute as many anchoring and fixing points for the top closing layer, as will be seen more clearly hereinafter.

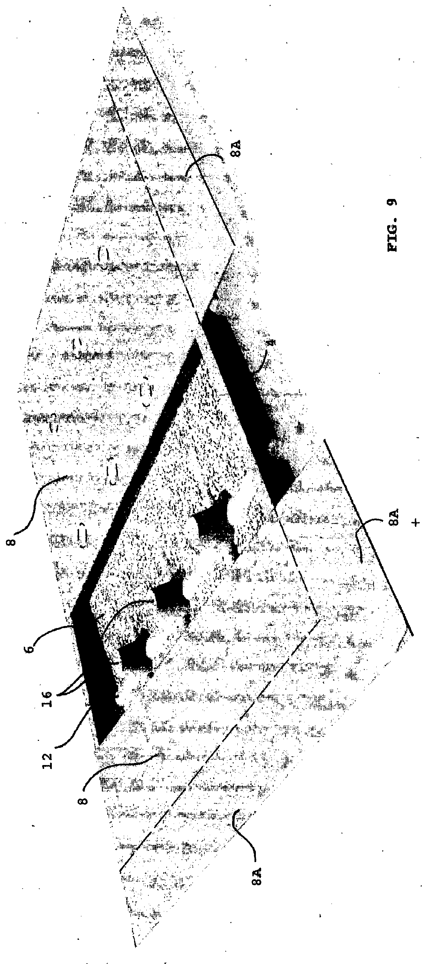

Introduced into the aforesaid module 4 is, as may be seen in Figure 9, a filling 6 of material that favours the growth of plants, for example expanded perlite, with a grain size 0.1-1.2 mm and a density of between 60 and 80 kg/m³. Thanks to its enormous capacity for withholding fluids - from three to five times its own weight - expanded perlite performs the function of retaining water-based substances and fertilizers and of providing proper aeration of the root systems and filtration of the percolation waters. Finally, since it presents excellent properties of thermal insulation, it protects the root systems from thermal variations.

The module 4 is closed at the top by a layer 8 of non-woven fabric, which has a mass per unit area clearly lower than that of the module, preferably in the region of 130 g/m², and has the function of separation and filtration element.

As mentioned previously, the non-woven geotextile 8 is preferably fixed to the system according to the invention by gluing, in purposely provided anchorage and fixing points of the module.

In particular, as may be seen in Figures 3 and 9, these points correspond to the top of the raised areas 16.

Once again in Figure 9, as likewise in Figure 2, it may be noted that there is provided in the layer of fabric 8 an excess of 100 mm on two continuous sides of the module 4, which gives rise to a flap 8A projecting from each of the two sides, as may be seen in Figure 9, so that, once other modules have been set alongside in sequence, it is possible to guarantee, by superposition of these projecting flaps on the covering layer of the contiguous modules, a perfect continuity of the filtration element.

Owing to the intrinsic characteristics of the material that constitutes the closing element, the latter enables passage of the roots of the species grown in the overlying growing medium, inside the container, enabling the layer of perlite, with the advantages it affords, to favour development of the vegetal species. This enables considerable reduction in the thickness of the top growing medium 10.

The module of the structural element of the invention, when adequately filled, presents an excellent filtering capacity and can thus be used for purification of the waters prior to their entry into the sewers in so far as it intrinsically has the capacity to withhold the particles percolated from the overlying layers and to retain and filter the solutions that traverse it.

As anticipated previously, the modular element 4 performs the additional function of separation between the various component layers that normally make up green roofs and walls.

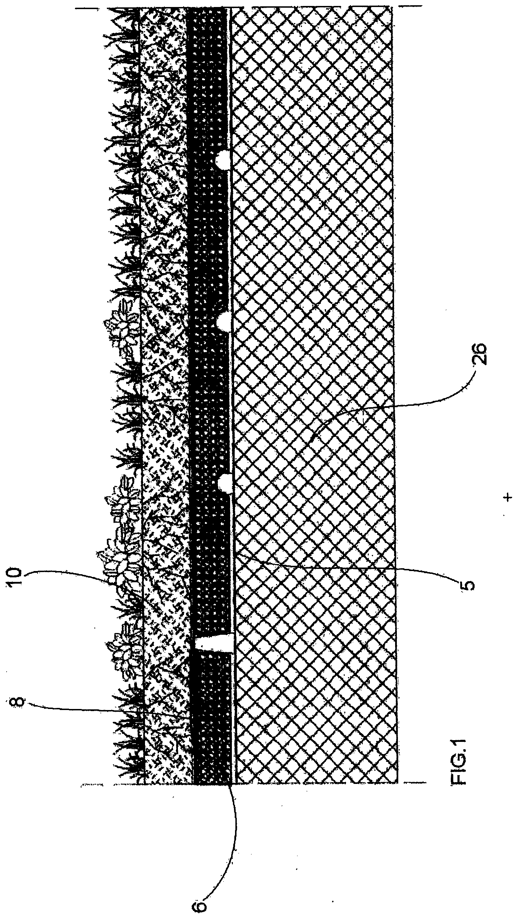

In fact, when the modular element 4 is rested directly on the root-barrier waterproofing membrane 5 that is normally stretched over the deck layer 26, as illustrated in Figure 1, it forms a barrier against perforation of the membrane itself, thus preventing any equipment used for normal maintenance operations from even accidentally coming into contact with the waterproofing membrane.

It should be emphasized that, in the choice of the components, there has been favoured the adoption of eco-compatible and bio-compatible materials and solutions that enable effects of compensation, mitigation, and environmental improvement.

From what has been described herein we can thus sum up the purposes and advantages of the present invention:
it provides an adequate protection for the waterproofing membrane as barrier element against perforation;
it provides a system of filtration of the waters that traverse it;
it provides a valid separation system;
it provides a drainage system that meets up to an extremely wide range of weather conditions;
it provides for water retention and regulation of the concentration flow;
it enables direct implantation of scions or direct laying of pre-cultivated vegetation mats and favours development thereof;
it supports the possible overlying growing medium whatever the type required by the vegetal species grown;
it feeds the vegetal species with closed-loop or open-loop fertigation systems;
it enables adaptation of the choice of the vegetal species to the pedoclimatic conditions;
it enables easy replacement of the species, if necessary;
it guarantees good sound-absorbing and acoustic-insulation performance;
it enables a considerable saving of water owing to its water-retention capacity; and
it reduces the installation times and facilitates operations of assemblage of a number of modules.

## Claims

1. A structural element for naturalization of horizontal and inclined sealed surfaces, constituted by:
a container (4) with quadrangular layout, the inside of which is articulated in the form of trays communicating with one another in order to provide proper hydraulic continuity inside it;
a filling (6) for said container, constituted by materials that favour the growth of plants, and
a top closing layer (8) that has the function of separation and filtration element in regard to any growing medium that is laid on top, albeit enabling passage within the container itself of the roots of the various species planted in the medium itself; thereby facilitating development of the roots of the plants ensuring proper circulation of air and water and consequently enabling reduction of the thickness of the top growing medium itself;
**characterized in that** the container (4) and the top closing layer (8) are obtained by thermoforming of non-woven draining geotextiles, of different mass per unit area, preferably consisting of 100% polyester.

2. The structural element for naturalization of horizontal and inclined sealed surfaces as per Claim 1, **characterized in that** the container (4) is constituted by a module made of non-woven draining geotextile, of the type consisting of 100% polyester, with thermoformable fibres, having a minimum mass per unit area of 500 g/m², but preferably of between 750 and 850 g/m², even more preferably of 800 g/m², a thickness of between 4.5 and 6.5, preferably 5.5 mm, and a density of between 135 and 175 kg/m³, preferably 160 kg/m³.

3. The structural element for naturalization of horizontal and inclined sealed surfaces as per Claim 2, **characterized in that** the module, obtained by thermoforming, consists of a single quadrangular container (4) provided with internal ribbings (12) parallel to the sides, which are set lower than the perimetral edges (14) so as to define a plurality of trays (V) of small dimensions in hydraulic continuity with one another once they have been filled with filling material (6) that favours plant growth; at each criss-crossing of the internal ribbings (12) there being provided raised areas (16) of height equal to that of the perimetral edges (14), which constitute anchorage and fixing points for the top closing layer (8) .

4. The structural element for naturalization of horizontal and inclined sealed surfaces as per Claim 1, **characterized in that** the container (4) is closed at the top by a layer (8) of non-woven fabric, having the function of separation and filtration element.

5. The structural element for naturalization of horizontal and inclined sealed surfaces as per Claim 1, **characterized in that** said layer (8) of non-woven fabric has a mass per unit area less than that of the container itself.

6. The structural element for naturalization of horizontal and inclined sealed surfaces, as per Claim 5, **characterized in that** the mass per unit area of said layer (8) is between 125 and 150 g/m², preferably 130 g/m².

7. The structural element for naturalization of horizontal and inclined sealed surfaces as per Claim 5, **characterized in that** said layer (8) is provided with an excess on two contiguous sides of the module itself that gives rise to two corresponding flaps (8A) projecting sufficiently to guarantee, once these sides have been set up against the sides without flaps of other contiguous modules in a sequence, a perfect continuity of the filtration element, without any need for gluing between the modules.

## Patentansprüche

1. Strukturelement zur Naturalisierung von horizontalen und geneigten versiegelten Flächen, bestehend aus:
einem Behälter (4) mit viereckigem Layout, dessen Innenseite sich in der Form von Fächern artikuliert, die miteinander kommunizieren, um eine geeignete hydraulische Kontinuität innerhalb davon bereitzustellen;
einer Füllung (6) für den Behälter, die aus Materialien besteht, die das Wachstum von Pflanzen begünstigen, und
einer oberen Abschlussschicht (8), welche die Funktion eines Trenn- und Filtrationselements hinsichtlich jedes Wachstumsmediums aufweist, das darauf gelegt wird, die jedoch den Durchgang von Wurzeln der verschiedenen Arten, die in dem Medium selbst gepflanzt sind, innerhalb des Behälters selbst ermöglicht und dadurch die Entwicklung der Wurzeln der Pflanzen erleichtert, wobei eine geeignete Zirkulation von Luft und Wasser sichergestellt und daher die Reduzierung der Dicke des oberen Wachstumsmediums selbst ermöglicht wird;
**dadurch gekennzeichnet, dass** der Behälter (4) und die obere Abschlussschicht (8) durch Thermoformen von Vliesdrainagegeotextilien von unterschiedlicher flächenbezogener Masse erlangt sind, die bevorzugt aus 100 % Polyester bestehen.

2. Strukturelement zur Naturalisierung von horizontalen und geneigten versiegelten Flächen nach Anspruch 1, **dadurch gekennzeichnet, dass** der Behälter (4) aus einem Modul besteht, das aus Vliesdrainagegeotextilie von der Art hergestellt ist, die aus 100 % Polyester besteht, mit wärmeformbaren Fasern mit einer minimalen flächenbezogenen Masse von 500 g/m², aber bevorzugt zwischen 750 und 850 g/m², noch mehr bevorzugt von 800 g/m2, einer Dicke zwischen 4,5 und 6,5, bevorzugt 5,5 mm, und einer Dichte zwischen 135 und 175 kg/m³, bevorzugt 160 kg/m³.

3. Strukturelement zur Naturalisierung von horizontalen und geneigten versiegelten Flächen nach Anspruch 2, **dadurch gekennzeichnet, dass** das Modul, das durch Thermoformen erlangt ist, aus einem einzelnen viereckigen Behälter (4) besteht, der parallel zu den Seiten mit Innenverrippungen (12) versehen ist, die niedriger als die Umfangskanten (14) festgelegt sind, um mehrere Fächer (V) von geringen Abmessungen zu definieren, die sich in hydraulischer Kontinuität miteinander befinden, sobald sie mit das Pflanzenwachstum begünstigendem Füllmaterial (6) gefüllt wurden; wobei an jeder Überkreuzung der Innenverrippungen (12) angehobene Bereiche (16) von einer Höhe gleich derjenigen der Umfangskanten (14) vorgesehen sind, die Verankerungs- und Befestigungspunkte für die obere Abschlussschicht (8) bilden.

4. Strukturelement zur Naturalisierung von horizontalen und geneigten versiegelten Flächen nach Anspruch 1, **dadurch gekennzeichnet, dass** der Behälter (4) an der Oberseite durch eine Schicht (8) aus Vliesstoff geschlossen ist, welche die Funktion des Trenn- und Filtrationselements aufweist.

5. Strukturelement zur Naturalisierung von horizontalen und geneigten versiegelten Flächen nach Anspruch 1, **dadurch gekennzeichnet, dass** die Schicht (8) aus Vliesstoff eine flächenbezogene Masse von kleiner als derjenigen des Behälters selbst aufweist.

6. Strukturelement zur Naturalisierung von horizontalen und geneigten versiegelten Flächen nach Anspruch 5, **dadurch gekennzeichnet, dass** die flächenbezogene Masse der Schicht (8) zwischen 125 und 150 g/m² und bevorzugt 130 g/m² liegt.

7. Strukturelement zur Naturalisierung von horizontalen und geneigten versiegelten Flächen nach Anspruch 5, **dadurch gekennzeichnet, dass** die Schicht (8) an zwei zusammenhängenden Seiten des Moduls selbst mit einem Übermaß versehen ist, das zwei entsprechende Laschen (8A) hervorruft, die ausreichend vorstehen, um eine perfekte Kontinuität des Filtrationselements ohne eine Notwendigkeit zum Verkleben zwischen den Modulen zu garantieren, sobald diese Seiten gegen die Seiten ohne Laschen von anderen zusammenhängenden Modulen in einer Reihenfolge gestellt wurden.

## Revendications

1. Élément structural pour la neutralisation de surfaces étanches horizontales et inclinées, constitué par :
un conteneur (4) avec configuration quadrangulaire, dont l'intérieur est articulé sous la forme de bacs communiquant entre eux de manière à fournir une continuité hydraulique correcte à l'intérieur de celui-ci ;
une garniture (6) pour ledit conteneur, constituée de matières qui favorisent la croissance de plantes, et
une couche de fermeture supérieure (8) qui a la fonction d'élément de séparation et de filtration par rapport à n'importe quel milieu de croissance qui est posé dessus, bien que permettant le passage à l'intérieur du conteneur lui-même des racines des diverses espèces plantées dans le support lui-même ; en facilitant ainsi le développement des racines des plantes en garantissant une circulation correcte d'air et d'eau et en permettant par conséquent une réduction de l'épaisseur du milieu de croissance supérieur lui-même ;
**caractérisé en ce que** le conteneur (4) et la couche de fermeture supérieure (8) sont obtenus par thermoformage de géotextiles drainants non tissés, de différente masse par unité de surface, de préférence composés de 100% de polyester.

2. Élément structural pour la neutralisation de surfaces étanches horizontales et inclinées selon la revendication 1, **caractérisé en ce que** le conteneur (4) est constitué par un module réalisé en géotextile drainant non tissé, du type composé de 100% de polyester, avec des fibres thermoformables, ayant une masse minimale par unité de surface de 500 g/m², mais de préférence entre 750 et 850 g/m², de manière davantage préférée de 800 g/m², une épaisseur entre 4,5 et 6,5, de préférence 5,5 mm, et une densité entre 135 et 175 kg/m³, de préférence 160 kg/m³.

3. Élément structural pour la neutralisation de surfaces étanches horizontales et inclinées selon la revendication 2, **caractérisé en ce que** le module, obtenu par thermoformage, consiste en un unique conteneur quadrangulaire (4) pourvu de nervures internes (12) parallèles aux côtés, qui sont prévues plus basses que les bords périphériques (14) de manière à définir une pluralité de bacs (V) de petites dimensions en continuité hydraulique entre eux une fois qu'ils ont été remplis avec la matière de remplissage (6) qui favorise la croissance de plantes ; au niveau de chaque entrecroisement des nervures internes (12), il est prévu des zones surélevées (16) de hauteur égale à celle des bords périphériques (14), qui constituent des points d'ancrage et de fixation pour la couche de fermeture supérieure (8).

4. Élément structural pour la neutralisation de surfaces étanches horizontales et inclinées selon la revendication 1, **caractérisé en ce que** le conteneur (4) est fermé au-dessus par une couche (8) de tissu non tissé, ayant la fonction d'élément de séparation et de filtration.

5. Élément structural pour la neutralisation de surfaces étanches horizontales et inclinées selon la revendication 1, **caractérisé en ce que** ladite couche (8) de tissu non tissé a une masse par unité de surface inférieure à celle du conteneur lui-même.

6. Élément structural pour la neutralisation de surfaces étanches horizontales et inclinées selon la revendication 5, **caractérisé en ce que** la masse par unité de surface de ladite couche (8) est entre 125 et 150 g/m², de préférence 130 g/m².

7. Élément structural pour la neutralisation de surfaces étanches horizontales et inclinées selon la revendication 5, **caractérisé en ce que** ladite couche (8) est prévue avec un excès sur deux côtés contigus du module lui-même qui engendrent deux volets correspondants (8A) suffisamment en saillie pour garantir, une fois que ces côtés ont été installés contre les côtés sans volets d'autres modules contigus suivant une séquence, une parfaite continuité de l'élément de filtration, sans aucune nécessité de collage entre les modules.
